# EUROPEAN PATENT SPECIFICATION

(11) **EP 2 086 217 B1**
(45) Date of publication and mention of the grant of the patent: **10.01.2018**
(21) Application number: 09250237.6
(22) Date of filing: 29.01.2009
(51) Int. Cl.: H04N 1/407

(54) **Image processing method**
Bildverarbeitungsverfahren
Procédé de traitement d'images

(30) Priority: 30.01.2008 JP 2008019201
(43) Date of publication of application: 05.08.2009
(73) Proprietor: Ricoh Company, Ltd., Tokyo 143-8555 (JP)
(72) Inventor: Kanehiro, Makoto, Tokyo 143-8555 (JP)
(74) Representative: J A Kemp

(56) References cited:
- EP-A- 0 723 364
- EP-A- 1 377 029
- DE-A1- 4 309 878
- JP-A- 2005 077 950
- US-A1- 2003 002 736
- US-A1- 2003 174 216
- US-A1- 2006 056 688

## Description

The present invention relates to an image processor, an image processing method, an image processing program, and an imaging apparatus.

When an image is shot by a digital camera, the luminance of a photographing subject is detected by an exposure controlling section inside the camera, parameters regarding a shutter speed, exposure of an aperture and so on are adjusted according to the luminance detected, and then the image shot by the camera is recorded such that the image has a predetermined tone expression.

However, not all images have tone expressions according to a photographer's intention. For example, in a case where an error in an exposure control happens for some reasons and so on, a photographer may wish to compensate tone expressions of the images shot after shooting.

For example, Japanese patent publication numbers 2006-128986 and 2005-130484, and Japanese patent registration number 3992177 disclose various kinds of tone compensation methods. In recent digital cameras, a function of an image compensation after shooting (hcre, a tone compensation) is often installed.

As for the digital cameras described above, it is possible for a user to manually compensate a tone of an image according to a user's desire and a shooting intention while confirming a compensation result.

A similar function, namely a technique using a tone curve, is already known as an application software for a personal computer (hereinafter, it is called PC). Here, the tone curve is an input-output conversion characteristic (function) in a case where a horizontal axis represents input image information and a vertical axis represents output image information. That is, the tone curve is defined as the function which converts a luminance value of an input image to a corresponding luminance value of an output image. Thus, obtaining the output image (or performing a predetermined compensation) corresponding to the input image by applying to the tone curve is generally called a tone mapping (tone mapping operation).

There have been known methods such as a method of compensation by shifting the tone curve to obtain a suitable tone expression of an entire image plane while displaying the tone curve on a PC screen (a method for shifting entirely a tone curve), and a tone compensation method where an image is divided into areas based on various conditions, a tone curve is obtained per area, each image per area is compensated to have a suitable tone, and each image per area after the tone compensation is combined to be one composite image.

As for the former method, there is a problem that a range capable of compensating is small because a compensation is performed to shift entirely one tone curve. For example, when a dark part is brightly-compensated to be entered in a tone where the dark part is expressible, there is no tone in a light part (so-called overexposure). Therefore, as a result, it is only a balance adjustment of either the dark part or the light part and how much of it is entered in an expressible part.

on the other hand, in the latter method, an image plane is divided into areas, a suitable tone curve is generated for each image per area, each image data per area is respectively compensated, and compensated divided area images are combined to obtain one composite image. Because of this procedure described above, a range of the compensation is large. However, in a case where this operation is performed inside of a digital camera in which especially a space or an electricity consumption is small, an exclusive IC (Integrated Circuit) for a calculation, an ultrahigh-performance CPU (Central Processing Unit) and so on are needed. Therefore, there are high possibilities of not avoiding a cost rise and of being over the electricity consumption. In addition, if these calculations are performed in a control CPU for a general digital camera, it takes a significantly long calculation time (time needed for a compensation) and thereby there is a problem of unusability.

US2003/0002736 on which the precharactersing portions of the independent claims are based discloses an automatic tone correction apparatus in which the distribution range of the luminance is adjusted and the centre of gravity of a lower luminance portion adjusted to match a target value.

An object of the present invention is to provide an image processor in which a calculation load of a CPU is small, a compensation range for an image is large, and a suitable compensation per image is capable of being performed, an image processing method, an image processing program, and an imaging apparatus.

In order to achieve the above object, the present invention provides an image processor as defined by claim 1.

Preferably, the tone curve generator performs the tone curve generation operation a predetermined number of times.

Preferably, the tone curve generator repeatedly performs the dividing operation and the compensation operation, in a case where entire luminance values are divided by predetermined resolution until an average value of a luminance value becomes a value between divided luminance values which are next to each other, and generates a new tone curve.

Preferably, the tone curve generator, in a case where entire luminance values are divided by predetermined resolution and an average value of a luminance value becomes a value between divided luminance values which are next to each other in a luminance value area, performs the dividing operation and the compensation operation only in a luminance area in which the average value of the luminance value does not become a value between the divided luminance values which are next to each other, and generates a new tone curve.

Preferably, the image processor further comprises: a tone curve compressor which compresses an output luminance value of a tone curve to prevent a tone jump in which a continuity of tone is lost in the tone curve generated by the tone curve generator.

Preferably, the image processor further comprises: a tone curve additional compensator which further compensates a tone curve so that a projection amount of the tone curve is decreased as it gets closer to a center value of an input luminance value.

Preferably, the luminance histogram calculator, in a case where a luminance histogram of input image data is calculated, uses a reduced image of the input image data.

In addition, the invention provides an image processing method as defined by claim 8.

Preferably, the tone curve generation process performs the tone curve generation operation a predetermined number of times.

Preferably, the tone curve generation process repeatedly performs the dividing operation and the compensation operation, in a case where entire luminance values are divided by predetermined resolution, until an average value of a luminance value becomes a value between divided luminance values which are next to each other, and generates a new tone curve.

Preferably, the tone curve generation process, in a case where entire luminance values are divided by predetermined resolution and an average value of a luminance value becomes a value between divided luminance values which are next to each other in a luminance value area, performs the dividing operation and the compensation operation only in a luminance area in which the average value of the luminance value does not become a value between the divided luminance values which are next to each other, and generates a new tone curve.

The invention provides an image processing program which is achieved by a computer to perform an operation in the image processing method according to any one of those methods described above.

The invention provides an imaging apparatus which uses the image processor according to any one of those image processors described above.

### The Brief Description of the Drawings

FIG. 1 illustrates a structural example of hardware of a digital camera as an imaging apparatus to which an imaging process of the present invention is applied.
FIG. 2 illustrates a structural example of an image processor of the present invention.
FIG. 3 is a flow chart which explains a processing operation of a digital camera in a case where an image processor is structured to be FIG. 2 described above.
FIG. 4 is an explanatory diagram which explains a processing operation of a tone curve generator in a first step of the present invention.
FIG. 5 is an explanatory diagram which explains another processing operation of the tone curve generator in the first step of the present invention.
FIG. 6 illustrates a luminance histogram when an image is compensated by a newly applied tone curve which is generated by the tone curve generator of the present invention.
FIG. 7 is an explanatory diagram which explains a processing operation of a tone curve generator in a first embodiment of the present invention.
FIG. 8 is an explanatory diagram which explains another processing operation of the tone curve generator in the first embodiment of the present invention.
FIG. 9 is an explanatory diagram which explains a processing operation of a tone curve generator in a second embodiment of the present invention.
FIG. 10 illustrates a tone curve which is finally generated.
FIG. 11 is a flow chart which illustrates a specific example of a repeat operation of the tone curve generator.
FIG. 12 is a diagram which illustrates another example of a tone curve generation operation.
FIG. 13 is a diagram which illustrates still another example of the tone curve generation operation.
FIG. 14 is a diagram which illustrates yet still another example of the tone curve generation operation.
FIG. 15 illustrates a structural example of an image processor of a sixth embodiment of the present invention.
FIG. 16 illustrates a tone curve which is compressed by a tone curve compressor of the sixth embodiment of the present invention.
FIG. 17 illustrates an example of a compensation result.
FIG. 18 illustrates a structural example of an image processor of an seventh embodiment of the present invention.
FIG. 19 illustrates a quadratic curve in order to prevent a tone jump.
FIG. 20 illustrates an example of a tone curve where the tone jump is prevented.

The present invention relates to an image processing which is applied to an imaging apparatus such as a digital camera and so on having a tone compensation function of image data. Here, assume that the present invention is applied to a digital camera, that is, the imaging apparatus will be explained as.the digital camera.

The present invention solves the above problems in a case where a tone compensation is performed by use of a tone curve. The present invention provides an image processor where one tone curve is compensated according to image data, and thereby the image data is compensated, so that a dark part and a light part in the image data are concurrently entered in an expressible tone range and a suitable compensation without incongruity is performed on the image data, an image processing method, an image processing program, and an imaging apparatus.

The present invention uses one tone curve which is partially compensated according to the image data for a tone compensation, therefore a calculation load is small. In addition, compared with a method where one tone curve is entirely shifted, a compensation range to the image data is large, and the suitable compensation is respectively performed on the image.

Therefore, the present invention is good for applying to the imaging apparatus such as the digital camera and so on having the tone compensation function of the image data. Hereinafter, assume that the present invention is applied to a digital camera, that is, the imaging apparatus will be explained as the digital camera.

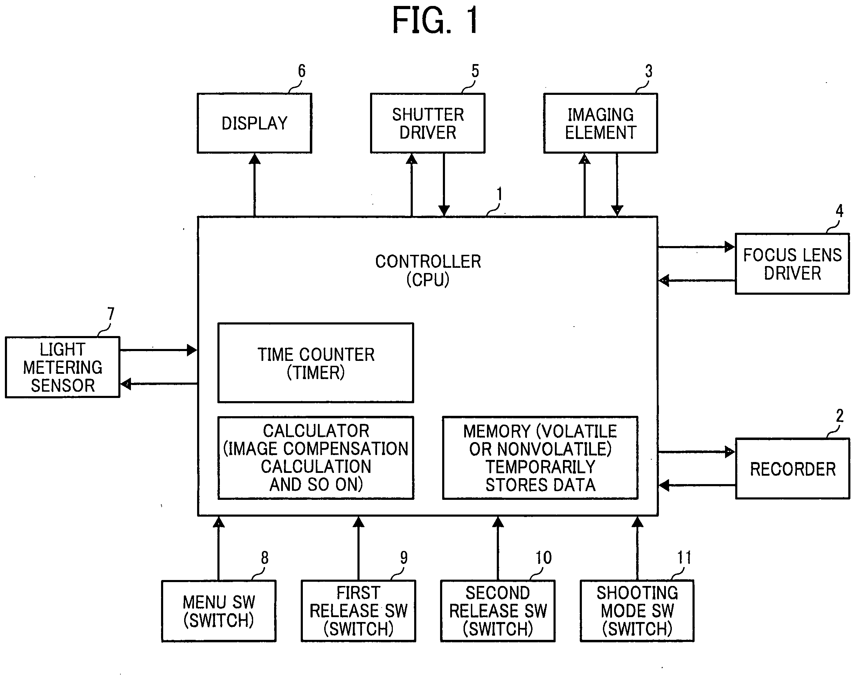

FIG. 1 illustrates a structural example of hardware of a digital camera as an imaging apparatus to which an image processing of the present invention is applied.

Referring to FIG. 1, this digital camera has a controller (CPU) 1, a memory 2, an imaging element 3, a focus lens driver 4, a shutter driver 5, a display 6, a light metering sensor 7, a menu switch 8, a first release switch (RL1SW) 9, a second release switch (RL2SW) 10, an imaging mode switch 11.

Here, the controller (CPU) 1 has a control function to control a movement of the camera, and a calculation function to perform various judgements and calculations, a time count (timer) function to count time, and a volatile or a nonvolatile memory area to store various setting values and so on included inside. A structure of the controller 1 does not have to be a one-chip CPU structure, and the structure may be a structure which is integrated with an image processing chip, or may be a structure of a control unit which includes a plurality of CPUs, an external memory and so on. In this controller 1, the calculation function, or the memory function, or the like is used, and various calculations and controls such as a luminance histogram calculation, a tone curve calculation, an image compensation calculation using the tone curve and so on as described later are performed.

The light metering sensor 7 is a sensor which detects information corresponding to brightness of a photographing subject. The light metering sensor-7 is driven by a control from the controller 1, detects an electric signal corresponding to the brightness of the photographing subject in a specified area or a plurality of areas of an imaging range, and inputs the signal to the controller 1 Instead of there being provided an exclusive light metering sensor, a structures which detects brightness using luminance information of imaging data by the imaging element 3 may be provided.

The first release switch (RL1SW) 9 to image is pressed halfway down to output an ON signal. The second release switch (RL2SW) 10 is pressed fully down to output an ON signal. In FIG. 1, the first release switch (RL1SW) 9 and the second release switch (RL2SW) are respectively illustrated as different switches.. However, in a general hardware structure, the first release switch (RL1SW) and the second release switch (RL2SW) are structured as the same component, and are a switch which outputs a signal as described above by a difference of an operation (a depth of pressing).

The focus lens driver 4 performs a movement to focus for imaging (focus drive), and the shutter driver 5 performs a movement to control a light amount (shutter drive). The focus lens driver 4 extracts a high-frequency component of the imaging data imaged by the imaging element 3, scans within an adjustment range of the focus lens (in a case of a general shooting mode, a position of the focus lens in the shooting mode is from the closest shooting distance to infinity) while obtaining a so-called focus evaluation value (it is also called an AF (Auto Focus) evaluation value) which is a resource for a focus judgment, and thereby the focus lens driver 4 also has a role of finding the position of the focus lens which is focused. The shutter driver 5 is a mechanism to control a transmission amount of light to the imaging element 3. An appropriate structure for the shutter driver 5 is selected from among structures such as a structure by a so-called single electronic shutter which is an electrical light amount adjustment mechanism using the imaging element 3, a combined structure of the electronic shutter and a shutter which mechanically opens and closes (there is a shutter structure used for both the shutter and an aperture, and a shutter structure in which the shutter and the aperture are separately provided), a structure by a single mechanical shutter, and so on.

The display 6 is a display using a liquid crystal, an organic EL (Electro-Luminescence), an LED (Light-Emitting Diode) and so on to display for monitoring as an operation of viewing a photographing subject before shooting (it is also called a live preview), display for a reproduction of images already shot, and display for a menu, various information, detected data and so on for advance settings of photographing conditions, imaging modes, operation setting selections, tone compensation level selections and so on.

The memory 2 is a recorder for storing image data after converting the image data already shot in a predetermined storing format, and is a recording medium such as an internal flash memory, a memory card, a hard disk and so on.

The imaging element 3 is an element to convert a photographing subject which is incident via a photographing optical system to an electric signal and input into the controller 1, and is structured by a CCD (Charge-Coupled Device) image sensor, or a CMOS (Complementary Metal-Oxide Semiconductor) image sensor or the like. The camera naturally has an imaging optical system (lens), which is not illustrated particularly, for example, a single-focus lens, or a multi-focus lens, or a zoom lens or the like.

The imaging mode SW (switch) 11 is a switch to set settings for selecting or performing an imaging mode or an image compensation, and may be a single selectable structure (the settings for selecting and performing are set by a plurality of the switch pressings), or may be a structure of a combination with a menu display to set the settings for selecting and performing.

The menu SW (switch) 8 is a switch to set a switching of the menu display or a general display. After displaying the menu, various settings, selecting or performing an operation level and the like are performed by use of a back-forth-right-left SW (switch) (not illustrated), a confirmation SW (switch) (not illustrated) and the like, and a general state is returned by the menu SW (switch) 8 after setting.

A power SW (switch), the back-forth-right-left SW to select and confirm the menu, a zoom SW (switch) to set an imaging range (imaging magnification) (a zooming operation when equipped with a zoom lens) and so on are not illustrated in the drawings and are not explained in detail here.

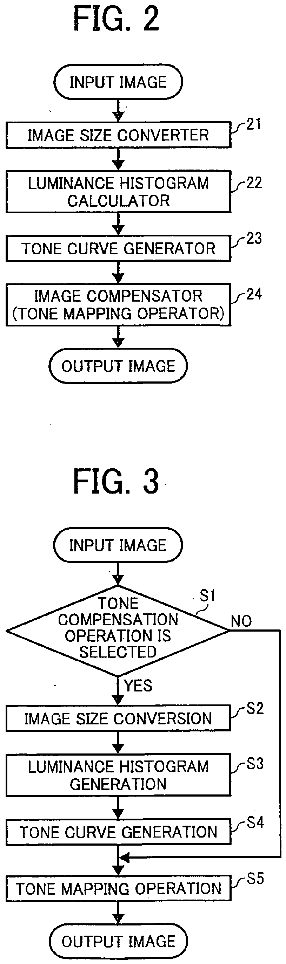

FIG. 2 illustrates a structural example of an image processor of the present invention. Referring to FIG. 2, the image processor of the present invention has an image size converter 21, a luminance histogram calculator 22, a tone curve generator 23, and an image compensator (tone mapping operator) 24. The image size converter 21 converts a size of input image data, when the image data is input. The luminance histogram calculator 22 calculates a histogram regarding luminance of the image data in which the size is converted by the image size converter 21. The tone curve generator 23 generates a tone curve from the luminance histogram calculated by the luminance histogram calculator 22. The image compensator (tone mapping processor) 24 compensates the image data by the tone curve which is generated by the tone curve generator 23 to be output image data.

The image size converter 21, in a case where input image data is small enough, is able to directly give the input image data to the luminance histogram calculator 22 without performing its function. That is, in this case, the image converter 21 is not needed, and the luminance histogram calculator 22 directly calculates a histogram regarding the luminance of the input image data.

However, a size of the input image data (image data which is imaged) is actually large. Therefore, the size of the input image data is reduced by the image size converter. 21 and a histogram of the reduced image such- as a monitoring image for the display (a live preview image) or the like is generally used, instead of the luminance data of actual input data (that is, the large input image data), so that a calculation amount is reduced when the luminance histogram is calculated and an entire operation is capable of being speeded up. In a case where the reduced image data is used, a tendency of the luminance histogram is the same as the actual input image data (the large image data), there are few differences in a calculated tone curve (which is compensated by the present invention). And in a case where the tone mapping (an image conversion/compensation is performed by use of a tone curve) is performed, the compensated tone curve is used for the input image data, and output image data is converted and outputted. Therefore, there is no degradation of image quality and an overall effect of speeding-up is large.

A processing operation of the digital camera in which the image processor has a structure of FIG. 2 will be explained by use of a flow chart of FIG. 3.

When power of the camera is on and a release button is pressed, after a focus operation by a light metering and an AF scanning, and the like, the camera starts shooting by a shutter operation.

When shooting, various operations are performed on the image data imaged by the imaging element 3 and inputted to the controller 1. At this time, it is judged whether or not a user selects a tone compensation operation by a menu button or the like (step S1).

. When the tone compensation operation is not selected, a tone mapping operation is performed on the image data by a tone curve which is set beforehand (step S5). After a predetermined operation, the image data is stored in the memory 2, and the shooting operation is finished.

Here, if a reproduction button is pressed, image data which is shot and stored is displayed on the display 6. And at this time, assume that a tone expression of the reproduced image is against a user's intention. In this case, at the step S1, the tone compensation operation is selected by the user with the menu button, operations of steps S2 to S5 are performed.

That is, when a size of the input image data is large, the size of the image data is converted by the image size converter 21 according to necessary precision in the tone curve generator 24 (step S2).

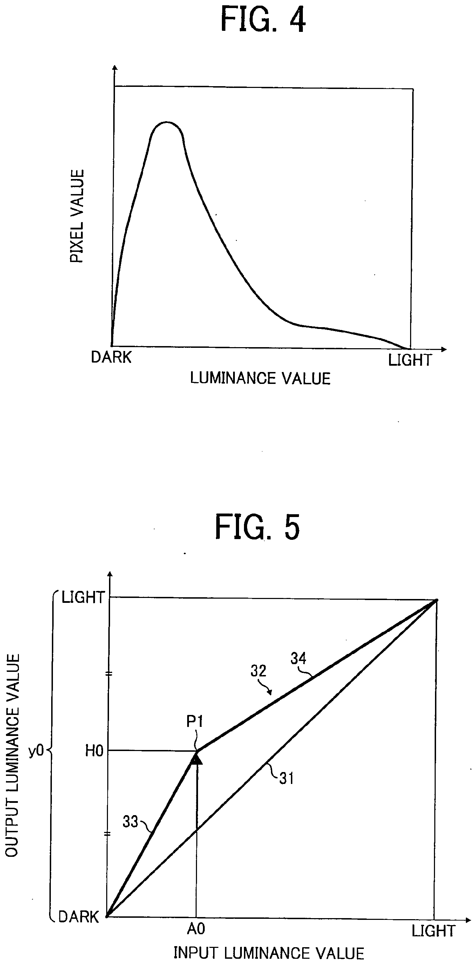

Next, a luminance histogram as illustrated in FIG. 4 is calculated by.the luminance histogram calculator 22 from the image converted to a suitable size by the image size converter 21 (step S3). At this time, as described above, a conversion to the suitable image size makes it possible to simplify an operation of the luminance histogram calculator 22 and shorten an operation time.

And the tone curve generator 23 generates a tone curve based on the luminance histogram calculated by the: luminance histogram calculator 22 (step S4).

And then, the tone mapping operation is performed by the tone curve generated by the tone curve generator 23 (step S5), and- after a predetermined operation, output image data is stored in the memory 2.

By the way, in the present invention, the tone curve generator 23 generates a suitable tone curve by use of the luminance histogram per image data. In particular, the tone curve generator 23 generates the suitable histogram by use of an average value of luminance obtained from the luminance histogram. That is, the tone curve generator 23 compensates the tone curve before the compensation so that a corresponding output value on the tone curve when the average value of the luminance is taken as an input value is set to be in a suitable tone output range, and generates a new tone curve. Thus, an image (a tone) compensation is performed by use of the new generated tone curve, and thereby a suitable tone compensation per image is performed.

Hereinafter, the tone curve generator 23 of the present invention will be described in detail.

In a first step with the present invention, when a default tone curve is given beforehand, the tone curve generator 23 compensates the default tone curve so that a corresponding output value on a tone curve becomes a center value in a width of the output value variance range of the default tone curve when an average value of a luminance value of the image data calculated from the luminance histogram is taken as an input value, and generates a new tone curve.

FIG. 4 and FIG. 5 are explanatory diagrams of operations of the tone curve generator 23 in this first step. FIG. 4 illustrates an example of a luminance histogram of the image data, and FIG. 5 is an explanatory diagram of a new tone curve generating operation in a case where the luminance histogram of the image data is FIG. 4.

The default tone curve, as illustrated by a numeral 31 in FIG.5, is given beforehand. An average value of a luminance value of the image data calculated from the luminance histogram of FIG. 4 is illustrated by a numeral A0 in FIG.5. The tone curve generator 23, as illustrated in FIG. 5, compensates the default tone curve 31 so that a corresponding output value on the tone curve becomes a center value H0 of a width of an output value variance range (a width of an output luminance value variance range) y0 when the average value of the luminance value A0 of the image data calculated by the luminance histogram of FIG. 4 is taken as an input value, and generates a new tone curve 32.

That is, in a case where the luminance histogram of the image data is an example as illustrated in FIG. 4, the image is an entirely dark image and the luminance histogram is on a dark part (left) side. Generally, in a case of an image which is desired to compensate a tone expression, as the example illustrated in FIG. 4, an average value of a luminance value is not in an area of the luminance histogram where the user intends (mostly in a center part) and is often placed in an imbalanced manner.

In an example of FIG. 5, by an operation that a corresponding point P1 (turning point) on the tone curve 31 when an average value of luminance A0 of the image data calculated from the luminance histogram is taken as an input point on the tone curve 31 is shifted to a center value H0 of a width of an output value variance range (a width of an output luminance value variance range) of the tone curve 31, a new tone curve 32 including two straight lines (tone curves) 33, 34 is generated. Here, the default tone curve 31 is a reference tone curve in which an input-output characteristic is linear. And in a case where the average value of the luminance value of the image data is taken as the input point, the turning point becomes P1, and thereby a new tone curve 32 including two straight lines (tone curves) 33, 34 is generated.

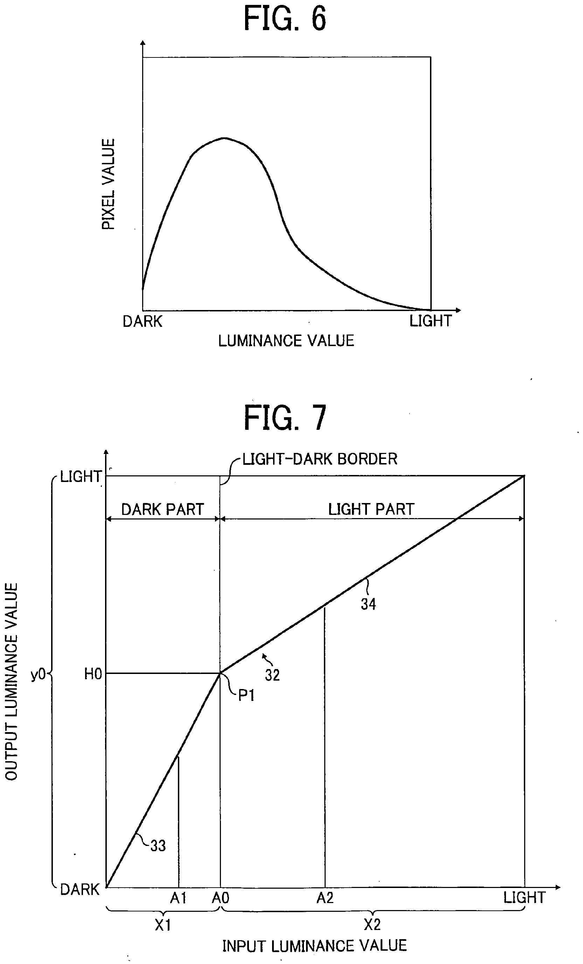

In a case where an image is compensated by applying the new tone curve 32 (33, 34) as generated above, a luminance histogram becomes like FIG. 6. Compared with FIG. 4 which is a luminance histogram before the compensation, it is obvious that a shape of an entire luminance histogram moves to a light direction. Therefore, a dark image is brightly-compensated to be closer to a center of a tone expression area.

In a first embodiment of the present invention, the tone curve generator 23, after compensating the default tone curve so that a corresponding output value on the tone curve when an average value of a luminance value of the image data calculated from the luminance histogram is taken as an input value becomes a center value of a width of an output value variance range of the default tone curve as the first embodiment described above, taking the average value of the luminance value as a border, divides an input luminance area of the tone curve into two luminance areas (input luminance areas) of a high luminance side and a low luminance side, and taking a point on the tone curve corresponding to the average value of the luminance value and a center value of the width of the output value variance range as a border, divides the compensated tone curve into two tone curves corresponding to the two luminance areas (input luminance areas), calculates an average value of an luminance value of the luminance histogram in each divided luminance area (input luminance area), compensates each tone curve so that each corresponding output value on each tone curve corresponding to each luminance area (each input luminance area) when the average value of the luminance value of the luminance histogram in each luminance area (input luminance area) is taken as an input point becomes a center value of the width of the output value variance range of each tone curve, and generates a new tone curve.

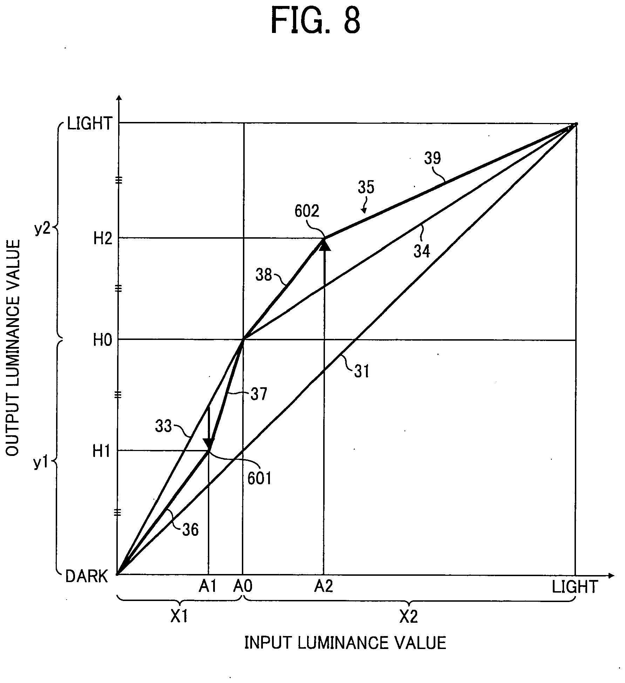

FIG.7 and FIG. 8 are diagrams to explain operations of the tone curve generator 23 in the first embodiment of the present invention. FIG. 7 illustrates a new tone curve 32 of FIG. 5, and FIG. 8 is a diagram to explain an operation where the new tone curve 32 of FIG. 5 is further compensated and a new tone curve 35 is generated.

Referring to FIG. 7 and FIG. 8, in the first embodiment of the present invention, taking an average value of the luminance value A0 of the image data calculated from the luminance histogram of FIG. 4 as a border, an input luminance area of the tone curve is divided into two luminance areas (input luminance areas) x1, x2 of a high luminance side and a low luminance side, and taking a point P1 on the tone curve corresponding to the average value of the luminance value A0 and a center value H0 of the width of the output value variance range y0 as a border, the compensated tone curve 32 is divided into two tone curves 33, 34 corresponding to the two luminance areas (input luminance areas) x1, x2. And the average values of the luminance values A1, A2 of the luminance histogram in each divided luminance area (input luminance areas) x1, x2 are calculated. And then, each tone 33, 34 is compensated so that corresponding output values 601, 602 on each tone curve 33, 34 corresponding to each luminance area (each input luminance area) x1, x2 when the average values of the luminance values A1, A2 in each luminance area (input luminance area) x1, x2 are taken as input points become center values H1, H2 of each width of output value variance range y1, y2 of the tone curves 33, 34, and a new tone curve 35 is generated.

That is, in the first embodiment of the present invention, firstly, after performing the operation explained in the first step, further taking the average value of the luminance value A0 of the image data calculated from the luminance histogram as a border, as illustrated in FIG. 7, an input luminance area of the tone curve is divided into a low luminance side (dark part) x1 and a high luminance side (light part) x2. And then, furthermore, in each divided luminance area (each input luminance area) x1, x2, a luminance histogram per luminance area (input luminance area) x1, x2 is calculated and the average values of the luminance values A1, A2 per luminance area (input luminance area) x1, x2 are calculated. And the tone curves 33, 34 per luminance area (input luminance area) x1, x2 are respectively compensated to be a tone curve 35 (36, 37, 38, 39) as illustrated in FIG. 8 so that obtained average values of the luminance values A1, A2 per area (input luminance area) x1, x2 are input points of the tone curves 33, 34 per luminance area (input luminance area) x1, x2 and corresponding output values 601, 602 on the tone curves 33, 34 are arranged in center values H1, H2 of each width of output value variance range (width of output value variance range) x1, x2.

In the first embodiment of the present invention, compared with the reference tone curve 31 (1:1 straight line in which there is no turning point and no input-output conversion), as a result, a tone curve 35 where an image is brightly tone-expressed in both of the dark part and the light part is calculated. That is, compared with the tone curve of Figure 5, in the dark part, the image is prevented from not being too brightly expressed, and in the light part, the tone curve is capable of expressing more brightly. Compared with performing the first step, image data is subdivided, and a luminance average value is calculated per luminance area (input luminance area) calculated by use of the luminance histogram. Thus, a tone curve is segmentally calculated, and thereby a tone curve which is more suitable for image data to be compensated is generated.

In a second embodiment of the present invention, the tone curve generator 23, taking the average value of the luminance value calculated from the luminance histogram in each luminance area (each input luminance area) as a border, further divides the input luminance area of the tone curves in each luminance area (each input luminance area) into two luminance areas (input luminance areas) of a high luminance side and a low luminance side, and taking each point on tone curves corresponding to the average value of the luminance value and center values of each width of output value variance range of tone curves calculated from the luminance histogram in each luminance area (each input luminance area) as borders, further divides each tone curve, calculates the average value of the luminance value of the luminance histograms in each divided luminance area (input luminance area), compensates each tone curve so that corresponding output values on each tone curve corresponding to each luminance area (each input luminance area) when the average value of the luminance value of the luminance histograms in each luminance area (input luminance area) are taken as input points become center values of each width of output value variance ranges of the tone curves, and generates a new tone curve. The above-described is a characteristic of the second embodiment of the present invention.

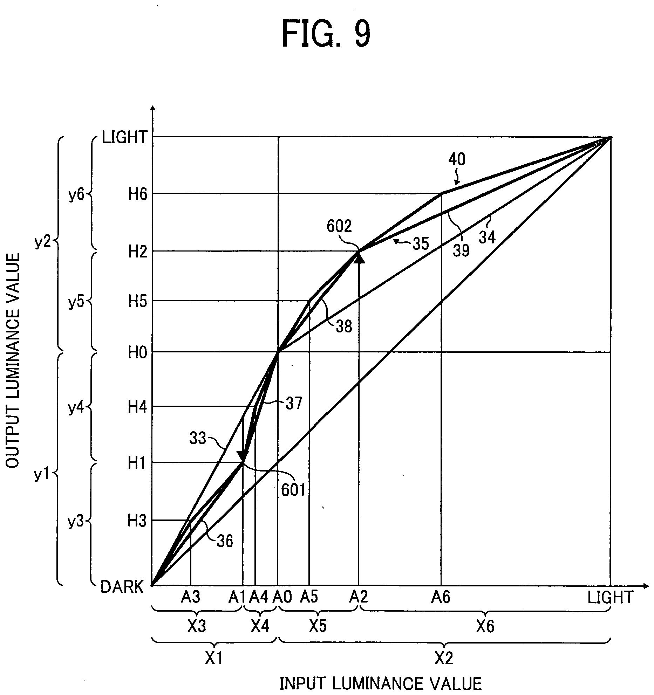

FIG. 9 is an explanatory diagram of a processing operation of the tone curve generator 23 in the second embodiment of the present invention. And FIG. 9 explains a further compensation operation of the new tone curve 35 (36, 37, 38, 39) of FIG. 8 and a generation operation of another new tone curve 40.

Referring to FIG. 9, in the second embodiment of the present invention, for example, firstly, taking the average value of the luminance value A1 calculated from the luminance histogram in the luminance area (input luminance area) x1 as a border, a luminance area of the tone curve 33 obtained from the first embodiment is divided into two luminance areas (input luminance area) x3, x4 of a low luminance area and a high luminance area, and taking the point 601 on the tone curve corresponding to the average value of the luminance value A1 and the center value H1 of a width y1 of output value variance range of the tone curve 33, the tone curve 33 is further divided into tone curves 36, 37. Then, average values of luminance values A3, A4 of luminance histograms in each divided luminance area (input luminance area) x3, x4 are calculated, and each tone curve 36, 37 is compensated so that each corresponding value on the tone curves 36, 37 becomes center values H3, H4 of each width of output value variance range y3, y4 of each tone curve 36, 37 when each average value of luminance value A3, A4 is taken as each input point. Next, taking the average value of the luminance value A2 calculated from the luminance histogram in the luminance area (input luminance area) x2 as a border, a luminance area of the tone curve 34 obtained from the first embodiment is divided into two luminance areas (input luminance area) x5, x6 of a low luminance area and a high luminance area, and taking the point 602 on the tone curve corresponding to the average value of the luminance value A2 and the center value H2 of a width y2 of output value variance range of the tone curve 34, the tone curve 3 is further divided into tone curves 38, 39. Then, average values of luminance values A5, A6 of luminance histograms in each divided luminance area (input luminance area) x5, x6 are calculated, and each tone curve 38, 39 is compensated so that each corresponding value on the tone curves 38, 39 becomes center values H5, H6 of each width of output value variance range y5, y6 of each tone curve 38, 39 when each average point of luminance value A5, A6 is taken as each input point. Thus, a new tone curve 40 is generated.

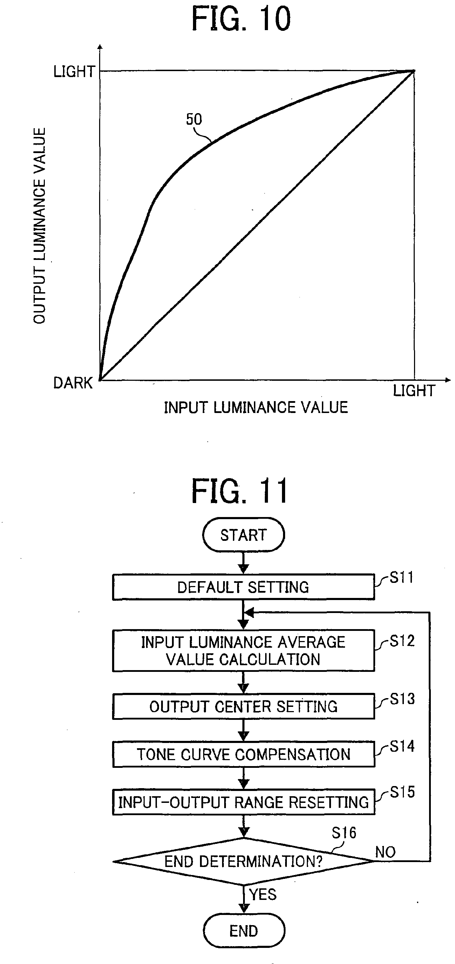

By repeating the above operations until output values of output luminance values corresponding to input luminance values (integers) which are set beforehand on an axis of an entire luminance are rearranged, for example, a tone curve 50 per image data as illustrated in FIG. 10 is eventually generated.

FIG. 11 illustrates a flow chart of a particular example of a repeat operation of the tone curve generator 23.

Referring to FIG. 11, firstly, a following default setting is performed to take an entire luminance histogram as an object (step S11).
1) an input range (input luminance area): defined as a minimum value and a maximum value of input luminance. For example, an input minimum value = 0, and an input maximum value = 255.
2) an output range (a width of output luminance variance range of the default tone curve): defined as a minimum value and a maximum value of output luminance of the default tone curve. For example, an input minimum value = 0, and an input maximum value = 255
3) in addition to the above input range and output range, the average value of the luminance value is specified. For example, in a case where the input range has 256 tones, if the resolution has 256 tones, the output luminance values corresponding to entire input luminance values are calculated.

After the above default setting, an average value of a luminance value (input luminance average value) in a specified input range is calculated (step S 12).

And one point of the tone curve is determined so that an output luminance value corresponding to the calculated input luminance average value becomes a center (1/2) of the output range (an output center is set) (step S13).

And then, a broken line where the determined point is connected with straight lines is a new tone curve (a tone curve is compensated) (step S 14).

Next, an input-output range is reset (step S15). That is, taking the calculated input luminance average value as a border, a next input range (each input luminance range) is set. And taking the output center value as a border, a next output range (a width of output luminance value variance range of the new tone curve (each tone curve)) is determined.

Next, an end determination is performed (step S16). That is, the end determination is performed by whether all output luminance values to input luminance values corresponding to the resolution set by the default setting are determined or not. When all the output luminance values to the input luminance values corresponding to the resolution set by the default setting are not determined, the operation goes back to the step S12 again, and until all the output luminance values to the input luminance values corresponding to the resolution set by the default setting is determined, the steps S12 to S15 are repeated.

As described above, by the tone curve generator 23 of the second embodiment, the tone curve 50 per image data, for example, as illustrated in FIG. 10, so that the tone curve compensation operation is repeated until the luminance output values of the tone curve corresponding to the input luminance values (integers) which are set beforehand on the axis of the entire luminance. As a result of performing an image (tone) compensation by use of the generated tone curve 50, an entirely dark image having the histogram as FIG. 4, is compensated to be an image having the histogram as FIG. 6 which is shifted to a light direction.

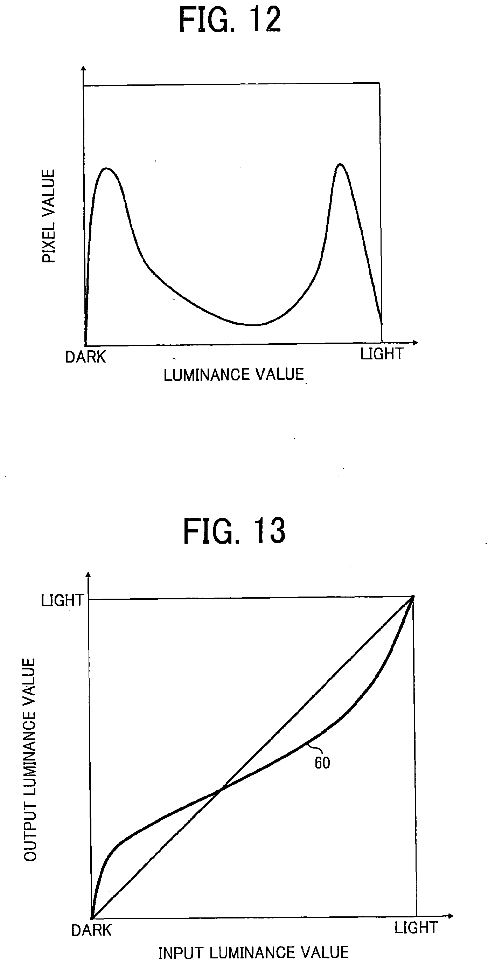

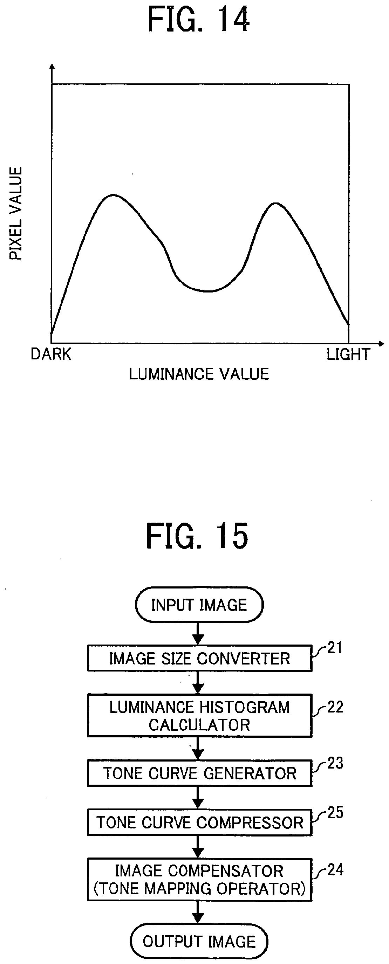

As illustrated in FIG. 12, in a case where image data has peak values respectively in the dark part and the light part of the luminance histogram, a tone curve 60 as illustrated in FIG. 13 is eventually generated. And as a result of an eventual image (tone) compensation, as illustrated in FIG. 14, peaks in the dark part and the light part of the luminance histogram are close to a center part where a tone is expressible, and this means that a compensation is performed so that main parts in the dark part and the light part are close to the center part where the tone is expressible.

In addition, it is ideal to perform a rearrangement operation of the tone curve (the tone curve generation operation in the embodiments of the first and second described above) until output luminance values of the tone curves corresponding to input luminance values which are set beforehand on the axis of the entire luminance are rearranged. However, an operation load and an operation time are considered, and the image compensation may be performed by use of a calculated tone curve when the operation is arbitrarily stopped by a predetermined number of times and a predetermined number of divides.

That is, as a third embodiment of the present invention, the tone curve generator 23 repeatedly performs the predetermined number of times a dividing operation of the luminance area (input luminance area) and the tone curve in the second embodiment and a compensation operation of the tone curve, and generates a new tone curve.

As a fourth embodiment of the present invention, the tone curve generator 23, when the entire luminance values are divided by the predetermined resolution, repeatedly performs the divide operation of the luminance area (input luminance area) and the tone curve in the second embodiment, and the compensation operation of the tone curve until an average value of the luminance value becomes a value between the divided luminance values which are next to each other, and generates a new tone curve.

As a fifth embodiment of the present invention, the tone curve generator 23, in the second embodiment, in a case where an average value of a luminance area in a luminance area becomes a value between divided luminance values which are next to each other, the dividing operation of the luminance value area (input luminance area) and the tone curve, and the compensation operation of the tone curve, only on an area where the average value of the luminance value does not become a value between divided luminance values which are next to each other, and generates a new tone curve.

In particular, in an operation illustrated in FIG.9, for example, in a case where the average values A1 and A0 of the luminance values of the luminance histogram are next to each other, that is, in a luminance area (input luminance area) x4, in a case where an average value of a luminance value is a value between the divided luminance values which are next to each other, the tone curve generation operation is finished at this stage (the fourth embodiment), or the tone curve generation operation (compensation operation) is continuously performed on only luminance areas (input luminance areas) x3, x5, x6 except the luminance area (input luminance area) x4.

FIG. 15 illustrates a structural example of an image processor of a sixth embodiment of the present invention. Referring to FIG. 15, in the sixth embodiment, in the tone curve generated by the tone curve generator 23 to prevent a tone jump, a tone curve compressor 25 is further provided. The tone curve compressor 25 compresses an output luminance value of the tone curve.

That is, the tone curve generated in any one of the first to the fifth embodiments is a suitable tone curve in a case where the output luminance range is larger enough than the input luminance range, however there is an additional problem in a case where the tone curve above is actually applied to a general digital camera and is performed. In the general digital camera, 8-bit input image data is expressed by 8-bit output image data, therefore in a case where the tone curve is rearranged by use of procedures of the first to the fifth embodiments and the image compensation is performed by use of the new tone curve, it is known that a phenomenon called a tone jump occurs when the tone curve generated has an abrupt (a steeply-inclined) part. The tone jump is the phenomenon where a continuity of the tone is lost in an output image of an image output by use of the tone curve. A specific example will be explained. For example, in a case where both input and output data are expressed by 8-bit, assume that luminance values of two consecutive points on the input luminance axis are smoothly changed to be 30, 31. Here, as a result of the image output by use of the tone curve, assume that output luminance values 30, 31 in each pixel value become respectively 40, 50. In the image of this output result, there is no data between 41 and 49 as the output luminance value. In this case, between the two points where the luminance values are supposed to be smoothly changed, an abrupt tone change is generated. Therefore, as the output image, the continuity of the tone is lost and is not smooth. The tone jump is a problem which should be avoided in the image output by use of the tone curve.

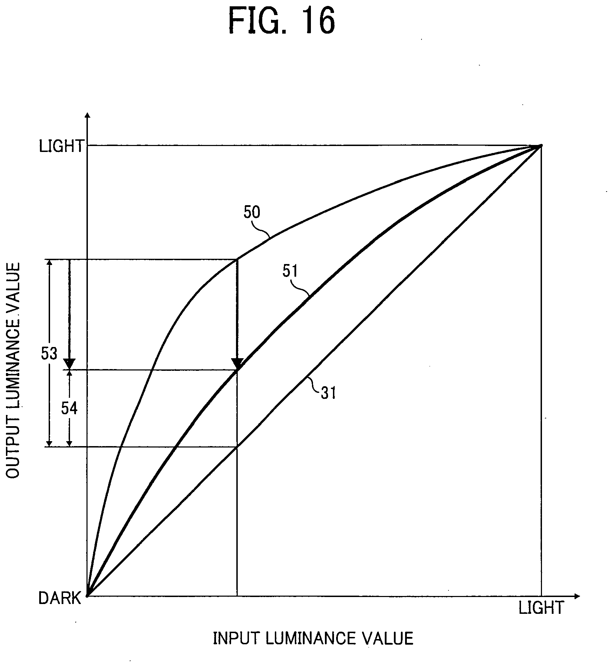

Therefore, in the sixth embodiment of the present invention, the tone curve compressor 25 compresses the output luminance value of the tone curve to prevent the tone jump in the tone curve generated by the tone curve generator 23. In particular, the tone curve in the first to the fifth embodiments, for example, the tone curve 50 illustrated in FIG. 10 is transformed into a tone curve 51 as illustrated in FIG. 16. That is, by compressing a curve to be controlled, the tone curve generated in the first to the fifth embodiments, for example, the tone curve 50 in FIG. 10, without sacrificing its characteristic, the tone jump is prevented. In a case where the tone curve generated in the first to the fifth embodiments, for example, the tone curve 50 in FIG. 10 is compressed, for example, a difference between an output luminance value of the tone curve 50 and an output luminance value of the tone curve 31 is taken as a distance 53 in an input value. When compressing the input luminance value to 40%, a following is performed.
1) A distance 54 is calculated by multiplying this distance 53 by 0.4.
2) An output value which is placed above the distance 54 is calculated from the output luminance value of the tone curve 31.
3) 1), 2) above are performed on the entire input luminance values.
By performing above 1) to 3), a new tone curve which is compressed to 40% is obtained.

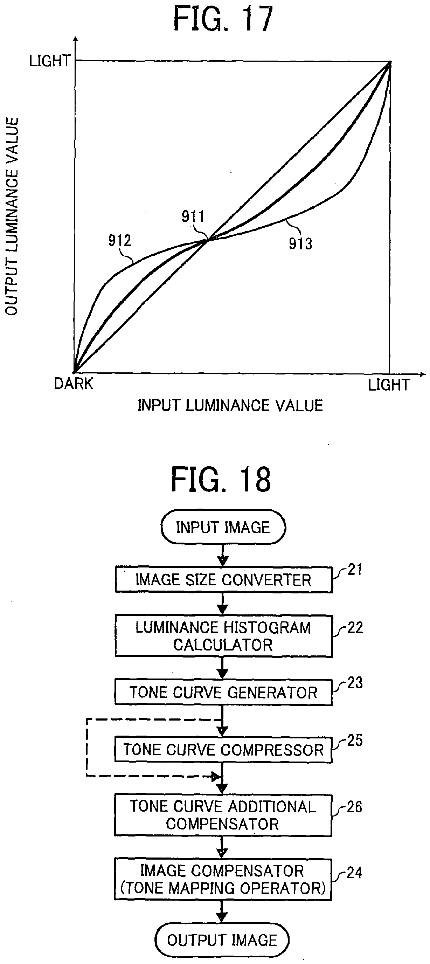

In the compression operation above, in a case where a tone curve resulting from the compensation, for example, as illustrated in FIG. 17, taking a reference tone curve (a reference straight line where an input luminance value directly corresponds to an output luminance value by 1:1) as a border, is a curve comprising curves 912, 913 which are arranged both above and below the reference straight line, the tone curve resulting from the compensation especially works effectively in the compression operation above. Taking an intersection point 911 as a border, the curve 912 works to lighten an image, and the curve 913 works to darken an image. The compression operation above is performed based on a distance from the reference straight line, therefore the intersection point 911 does not move in a result of the compression operation, and a problem such that a place supposed to be darkened is lightened in the compression operation does not occur.

A compression rate, in a predetermined image, in a case where there is a steep inclination in the tone curve in which the tone compensation operation is performed, may be set so that the tone jump does not occur, and is not limited to a numeric value, 40 %.

In addition, FIG. 18 illustrates a structural example of an image processor of an seventh embodiment of the present invention. Referring to FIG. 18, in the seventh embodiment of the present invention, a tone curve additional compensator 26 is further provided. The tone curve additional compensator 26 further compensates the tone curve obtained by any one of the first to the sixth embodiments so that a projection amount of the tone curve to the tone curve 31 is decreased as the tone curve is closer to a center value of the input luminance value of image data.

By further provided the above tone curve additional compensator 26, a further prevention of the tone jump is performed.

That is, in a general tone expression, it is known that the tone jump is more noticeable in a middle luminance part than in extremely dark and light luminance parts. In the seventh embodiment of the present invention, to solve this problem, a filter to prevent a projection amount of the tone curve as it gets closer to the middle luminance part in a compensated tone curve is applied.

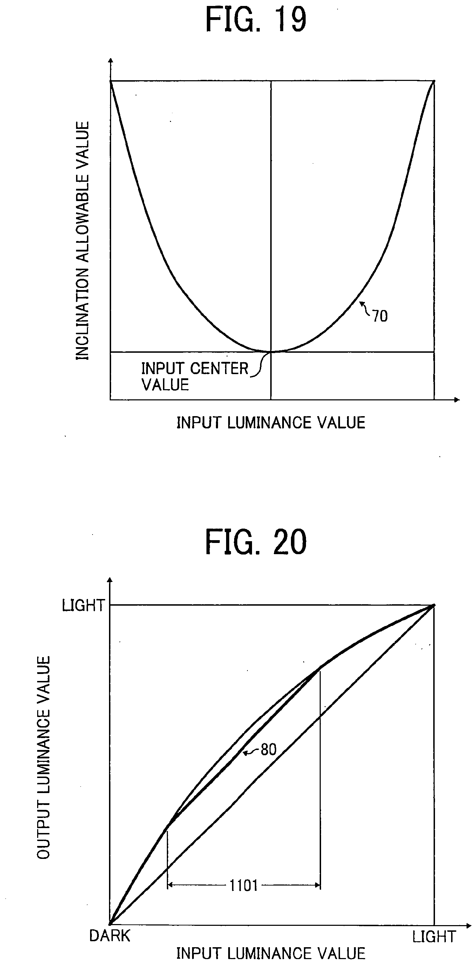

Specifically, it is possible to use a quadratic curve 70 as illustrated in FIG. 19. In a quadratic curve, the closer to a center, the more moderate an inclination is. Using this characteristic, by filtering with a quadratic curve, the projection amount of the tone curve is small, and the projection amount of the tone curve is large in both end parts (dark and light parts) in the vicinity of the center value of the input luminance value. By this method, it is comparatively easy to prevent an abrupt tone curve change in the middle luminance value, and to allow the tone curve change in the dark and light parts. A shape of a tone curve after compensating by the filter above, becomes a shape as illustrated in FIG. 20 in which the projection amount of a middle luminance part 1101 is prevented.

In a structural example of FIG. 18, an additional compensation operation by the tone curve additional compensator 26 is performed on the tone curve compressed by the tone curve compressor 25. However, the seventh embodiment of the present invention does not have to be provided with the tone curve compressor 25, in this case, as illustrated by a dashed line in FIG. 18, the additional compensation operation by the tone curve additional compensator 26 is performed on the tone curve generated by the tone curve generator 23.

An image to be compensated is an image against a photographer's intention, therefore it is possible to easily achieve a tone compensation according to an image where the photographer's intention is reflected and the tone jump does not easily occur by performing the processing of the present invention which has been described.

Additionally, it is possible for the present invention to be achieved without a special hardware as described later. Compared with the method of calculating tone curves per area, respectively compensating the tone curves and compositing compensated images, a calculating amount is small and calculating speed is fast enough.

As described above, the image processor of the present invention, in the example of FIG. 1, is achieved by the controller (CPU) 1.

And, as for the image processor and the operations in the image processing method as explained in each embodiment to carry out the present invention, in the example of FIG. 1, it is possible to be provided as a program (image processing program) which is achieved by the controller (CPU) 1.

In addition, the program, which is achieved by, for example, the controller (CPU) 1, to perform the operations in the image processor to carry out the present invention described above, is stored on computer-readable recording media such as a hard disk, a floppy disk, a CD-ROM (Compact Disk Read Only Memory), an MO (Magneto-Optical disk), a DVD (Digital Versatile Disk) and so on, and is carried out by being read out from the recording medium by the computer. And this program is able to be distributed by the recording medium on which the program is stored, and via a network of the internet and so on.

In the explanation above, an imaging apparatus to which the image processing of the present invention is applied has been explained as a digital camera, however the imaging apparatus to which the image processing of the present invention is applied is not limited to the digital camera.

According to the embodiments of the present invention, one tone curve is partially compensated according to an image (luminance histogram of image data) and is used for a tone compensation, therefore a calculation load of a CPU is small. Furthermore a compensation range to the image is large and a suitable compensation is performed per image.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An image processor comprising:
a luminance histogram calculator (22) which calculates a luminance histogram regarding luminance of image data having luminance information;
a tone curve generator (23) which generates a tone curve where an input-output conversion characteristic is compensated by use of a default tone curve (31) and the luminance histogram calculated by the luminance histogram calculator (22), the default tone curve (31) indicating the input-output conversion characteristic in which a luminance value of an input image defined on a horizontal axis is converted to a luminance value of an output image defined on a vertical axis and where a minimum and a maximum values of output luminance are defined; and
an image compensator (24) which compensates input image data by the tone curve generated by the tone curve generator (23) to be output image data;
wherein:
the tone curve generator (23) performs a tone curve compensation operation such that a turning point of a tone curve is set such that a value on the vertical axis on the default tone curve (31) corresponding to an average value of the luminance value of the input image data, which is a value on the horizontal axis, calculated by the luminance histogram calculator (22) becomes a target value between the minimum and the maximum values of the output luminance; and
the tone curve generator (23) then performs a tone curve dividing operation such that a value on the horizontal axis of the turning point set last is taken as a border, a luminance area of the luminance histogram is set to two luminance areas of a high luminance side and a low luminance side, and the tone curve compensated last is divided into two tone curves corresponding to the two luminance areas, and performs a tone curve compensation operation such that in the set luminance area of the high luminance side, a second turning point is set and a compensated tone curve is generated by connecting the point on the default tone curve (31) where the value on the vertical axis of the tone curve indicates the maximum value of the output luminance, the point on the default tone curve (31) where the value on the vertical axis of the tone curve indicates the minimum value of the output luminance, and the set turning points adjacent to each other of the set turning points with straight lines;
**characterized in that**:
the target value is a center value between the minimum and the maximum values of the output luminance;
in the set luminance area of the high luminance side an average value of a luminance value of a luminance histogram, which is a value on the horizontal axis, is calculated, and the second turning point is set such that a value on the vertical axis of the tone curve compensated last corresponding to the calculated average value of the luminance value becomes a center value between a value on the vertical axis of the turning point set last and a maximum value on the vertical axis in the set luminance area of the high luminance side,
in the set luminance area of the low luminance side, an average value of a luminance value of a luminance histogram, which is a value on the horizontal axis, is calculated, a third turning point is set such that a value on the vertical axis of the tone curve compensated last corresponding to the calculated average value of the luminance value becomes a center value between a value on the vertical axis of the turning point set last and a minimum value on the vertical axis in the set luminance area of the low luminance side, and
the compensated tone curve is generated by connecting the point on the default tone curve (31) where the value on the vertical axis of the tone curve indicates the maximum value of the output luminance, the point on the default tone curve (31) where the value on the vertical axis of the tone curve indicates the minimum value of the output luminance, and the set turning points adjacent to each other of the set turning points with straight lines.

2. The image processor according to claim 1, wherein the tone curve generator (23) performs the tone curve dividing operation repeatedly, and performs the tone curve compensation operation a predetermined number of times.

3. The image processor according to claim 1, wherein the tone curve generator (23) repeatedly performs the tone curve dividing operation and the tone curve compensation operation, in a case where entire luminance values are divided by predetermined resolution until an average value of a luminance value becomes a value between divided luminance values which are next to each other, and a compensated tone curve is generated.

4. The image processor according to claim 1, wherein the tone curve generator (23), in a case where entire luminance values are divided by predetermined resolution and an average value of a luminance value becomes a value between divided luminance values which are next to each other in a luminance value area, performs the tone curve dividing operation and the tone curve compensation operation only in a luminance area in which the average value of the luminance value does not become a value between the divided luminance values which are next to each other, and a compensated tone curve is generated.

5. The image processor according to any one of claims 1 to 4, further comprising:
a tone curve compressor (25) which compresses an output luminance value of a tone curve to prevent a tone jump occurred by an amount of output change of the output image data for an amount of change of the input image data which becomes larger than a predetermined amount in the compensated tone curve generated by the tone curve generator (23).

6. The image processor according to any one of claims 1 to 5, further comprising:
a tone curve additional compensator (26) which further compensates a tone curve so that a projection amount of the tone curve is decreased as it gets closer to a center value of an input luminance value.

7. The image processor according to any one of claims 1 to 6, wherein the luminance histogram calculator (22), in a case where a luminance histogram of input image data is calculated, uses a reduced image of the input image data.

8. An image processing method comprising:
a luminance histogram calculation process which calculates a luminance histogram regarding luminance of image data having luminance information;
a tone curve generation process which generates a tone curve where an input-output conversion characteristic is compensated by use of a default tone curve (31) and the luminance histogram calculated by the luminance histogram calculation process, the default tone curve (31) indicating the input-output conversion characteristic in which a luminance value of an input image defined on a horizontal axis is converted to a luminance value of an output image defined on a vertical axis and where a minimum and a maximum values of output luminance are defined; and
an image compensation process which compensates input image data by the tone curve generated by the tone curve generation process to be output image data;
wherein:
the tone curve generation process performs a tone curve compensation operation such that a turning point of a tone curve is set such that a value on the vertical axis on the default tone curve (31) corresponding to an average value of the luminance value of the input image data, which is a value on the horizontal axis, calculated by the luminance histogram calculation process becomes a target value between the minimum and the maximum values of the output luminance; and the tone curve generation process then performs a tone curve dividing operation such that a value on the horizontal axis of the turning point set last is taken as a border, a luminance area of the luminance histogram is set to two luminance areas of a high luminance side and a low luminance side, and the tone curve compensated last is divided into two tone curves corresponding to the two luminance areas, and performs a tone curve compensation operation such that and in the set luminance area of the high luminance side, a second turning point is set and a compensated tone curve is generated by connecting the point on the default tone curve (31) where the value on the vertical axis of the tone curve indicates the maximum value of the output luminance, the point on the default tone curve (31) where the value on the vertical axis of the tone curve indicates the minimum value of the output luminance, and the set turning points adjacent to each other of the set turning points with straight lines;
**characterized in that**:
the target value is a center value between the minimum and the maximum values of the output luminance;
in the set luminance area of the high luminance side an average value of a luminance value of a luminance histogram, which is a value on the horizontal axis, is calculated and the second turning point is set such that a value on the vertical axis of the tone curve compensated last corresponding to the calculated average value of the luminance value becomes a center value between a value on the vertical axis of the turning point set last and a maximum value on the vertical axis in the luminance area of the high luminance side,
in the set luminance area of the low luminance side, an average value of a luminance value of a luminance histogram, which is a value on the horizontal axis, is calculated, a turning point is newly set such that a value on the vertical axis of the tone curve compensated last corresponding to the calculated average value of the luminance value becomes a center value between a value on the vertical axis of the turning point set last and a minimum value on the vertical axis in the set luminance area of the low luminance side, and
the compensated tone curve is generated by connecting the point on the default tone curve (31) where the value on the vertical axis of the tone curve indicates the maximum value of the output luminance, the point on the default tone curve (31) where the value on the vertical axis of the tone curve indicates the minimum value of the output luminance, and the set turning points adjacent to each other of the set turning points with straight lines.

9. The image processing method according to claim 8, wherein the tone curve generation process performs the tone curve dividing operation repeatedly, and performs the tone curve compensation operation a predetermined number of times.

10. The image processing method according to claim 8, wherein the tone curve generation process repeatedly performs the tone curve dividing operation and the tone curve compensation operation, in a case where entire luminance values are divided by predetermined resolution, until an average value of a luminance value becomes a value between divided luminance values which are next to each other, and a compensated tone curve is generated.

11. The image processing method according to claim 8, wherein the tone curve generation process, in a case where entire luminance values are divided by predetermined resolution and an average value of a luminance value becomes a value between divided luminance values which are next to each other in a luminance value area, performs the tone curve dividing operation and the tone curve compensation operation only in a luminance area in which the average value of the luminance value does not become a value between the divided luminance values which are next to each other, and a compensated tone curve is generated.

12. An image processing program which, when executed by a computer system, instructs the system to perform the image processing method according to any one of claims 8 to 11.

13. An imaging apparatus, which uses the image processor according to any one of claims 1 to 7.

## Patentansprüche

1. Bildverarbeiter, umfassend:
einen Leuchtdichtenhistogramm-Rechner (22), der ein Leuchtdichtenhistogramm hinsichtlich der Leuchtdichte von Bilddaten mit Leuchtdichteninformation berechnet;
einen Tonkurvengenerator (23), der eine Tonkurve erzeugt, wo eine Eingang-Ausgang-Umwandlungskennlinie durch die Verwendung einer Standardtonkurve (31) und des Leuchtdichtenhistogramms, das von dem Leuchtdichtenhistogramm-Rechner (22) berechnet wurde, ausgeglichen wird, wobei die Standardtonkurve (31) die Eingang-Ausgang-Umwandlungskennlinie anzeigt, in der ein Leuchtdichtenwert eines Eingangsbilds, das an einer horizontalen Achse bestimmt ist, zu einem Leuchtdichtenwert eines Ausgangsbilds, das an einer vertikalen Achse bestimmt ist, umgewandelt wird, und wo ein Minimal- und ein Maximalwert von Ausgangsleuchtdichte bestimmt werden; und
einen Bildkompensator (24), der Eingangsbilddaten durch die Tonkurve ausgleicht, die durch den Tonkurvengenerator (23) erzeugt wurde, sodass sie Ausgangsbilddaten sind;
wobei:
der Tonkurvengenerator (23) eine Tonkurvenausgleichsvorgang durchführt, sodass ein Wendepunkt einer Tonkurve so festlegt ist, dass ein Wert an der vertikalen Achse an der Standardtonkurve (31) entsprechend eines Durchschnittswerts des Leuchtdichtenwerts der Eingangsbilddaten, der ein Wert an der horizontalen Achse ist, der durch den Leuchtdichtenhistogramm-Rechner (22) berechnet wurde, ein Zielwert zwischen den Minimal- und Maximalwerten der Ausgangsleuchtdichte wird; und
der Tonkurvengenerator (23) dann einen Tonkurvenaufteilungsvorgang durchführt, sodass ein Wert an der horizontalen Achse des Wendepunkts, der als letztes festgelegt wird, als eine Grenze genommen wird, ein Leuchtdichtenbereich des Leuchtdichtenhistogramms zu zwei Leuchtdichtenbereichen einer Seite mit hoher Leuchtdichte und einer Seite mit niedriger Leuchtdichte festgelegt wird und die Tonkurve, die als letztes ausgeglichen wird, in zwei Tonkurven aufgeteilt wird, die den zwei Leuchtdichtenbereichen entsprechen, und einen Tonkurvenausgleichsvorgang durchführt, sodass in dem festgelegten Leuchtdichtenbereich der Seite mit hoher Leuchtdichte ein zweiter Wendepunkt festgelegt wird und eine ausgeglichene Tonkurve erzeugt wird, indem der Punkt an der Standardtonkurve (31) wo der Wert der vertikalen Achse der Tonkurve den Maximalwert der Ausgangsleuchtdichte anzeigt, der Punkt an der Standardtonkurve (31) wo der Wert an der vertikalen Achse der Tonkurve den Maximalwert der Ausgangsleuchtdichte anzeigt, und die festgelegten Wendepunkte, die einander angrenzen, der festgelegten Wendeunkte mit geraden Linien verbunden werden;
**dadurch gekennzeichnet, dass**:
der Zielwert ein Mittelwert zwischen den Minimal- und Maximalwerten der Ausgangsleuchtdichte ist;
in dem festgelegten Leuchtdichtebereich der Seite mit hoher Leuchtdichte ein Durchschnittswert eines Leuchtdichtenwerts eines Leuchtdichtenhistogramms, der ein Wert an der horizontalen Achse ist, berechnet wird, und der zweite Wendepunkt so festgelegt ist, dass ein Wert an der vertikalen Achse der Tonkurve, der als letztes entsprechend dem berechneten Durchschnittswert des Leuchtdichtenwerts ausgeglichen wird, ein Mittelwert zwischen einem Wert an der vertikalen Achse des Wendepunkts, der als letztes festgelegt wird, und einem Maximalwert an der vertikalen Achse in dem festgelegten Leuchtdichtenbereich der Seite mit hoher Leuchtdichte wird,
in dem festgelegten Leuchtdichtebereich der Seite mit niedriger Leuchtdichte ein Durchschnittswert eines Leuchtdichtenwerts eines Leuchtdichtenhistogramms, der ein Wert an der horizontalen Achse ist, berechnet wird, ein dritter Wendepunkt so festgelegt ist, dass ein Wert an der vertikalen Achse der Tonkurve, der als letztes entsprechend dem berechneten Durchschnittswert des Leuchtdichtenwerts ausgeglichen wird, ein Mittelwert zwischen einem Wert an der vertikalen Achse des Wendepunkts, der als letztes festgelegt wird, und einem Minimalwert an der vertikalen Achse in dem festgelegten Leuchtdichtenbereich der Seite mit niedriger Leuchtdichte wird, und
die ausgeglichene Tonkurve erzeugt wird, indem der Punkt an der Standardtonkurve (31) wo der Wert an der vertikalen Achse der Tonkurve den Maximalwert der Ausgangsleuchtdichte angibt, der Punkt an der Standardtonkurve (31) wo der Wert an der vertikalen Achse der Tonkurve den Minimalwert der Ausgangsleuchtdichte angibt, und die festgelegten Wendepunkte, die einander angrenzen, der festgelegten Wendepunkte mit geraden Linien verbunden werden.

2. Bildprozessor nach Anspruch 1, wobei der Tonkurvengenerator (23) den Tonkurvenaufteilungsvorgang wiederholt durchführt, und den Tonkurvenausgleichsvorgang in einer vorbestimmten Anzahl von Wiederholungen durchführt.

3. Bildprozessor nach Anspruch 1, wobei der Tonkurvengenerator (23) den Tonkurvenaufteilungsvorgang und den Tonkurvenausgleichsvorgang in einem Fall, in dem vollständige Leuchtdichtenwerte durch vorbestimmte Auflösung aufgeteilt werden, wiederholt durchführt, bis ein Durchschnittswert eines Leuchtdichtenwerts ein Wert zwischen aufgeteilten Leuchtdichtenwerten wird, die nebeneinanderliegen, und eine ausgeglichene Tonkurve erzeugt wird.

4. Bildprozessor nach Anspruch 1, wobei der Tonkurvengenerator (23) in einem Fall, in dem vollständige Leuchtdichtenwerte durch vorbestimmte Auflösung aufgeteilt werden und ein Durchschnittswert des Leuchtdichtenwerts ein Wert zwischen aufgeteilten Leuchtdichtenwerten wird, die in einem Leuchtdichtenbereich nebeneinanderliegen, den Tonkurvenaufteilungsvorgang und den Tonkurvenausgleichsvorgang nur in einem Leuchtdichtenbereich durchführt, in dem der Durchschnittswert des Leuchtdichtenwerts nicht ein Wert zwischen den aufgeteilten Leuchtdichtenwerten wird, die nebeneinanderliegen, und eine ausgeglichene Tonkurve erzeugt wird.

5. Bildprozessor nach einem der Ansprüche 1 bis 4, ferner umfassend:
einen Tonkurvenverdichter (25), der einen Ausgangsleuchtdichtenwert einer Tonkurve komprimiert, um ein plötzliches Ansteigen des Tonwerts, das durch eine Menge von Veränderung der Ausgangsbilddaten für eine Menge von Veränderung der Eingangsbilddaten, die größer als eine vorbestimmte Menge wird, in der ausgeglichenen Tonkurve auftritt, die durch den Tonkurvengenerator (23) erzeugt wurde, zu vermeiden.

6. Bildprozessor nach einem der Ansprüche 1 bis 5, ferner umfassend:
einen zusätzlichen Tonkurvenkompensator (26), der ferner eine Tonkurve ausgleicht, sodass eine Menge von Ausbuchtungen der Tonkurve verringert wird, während sie sich einem Mittelwert eines Eingangsleuchtdichtenwerts annähert.

7. Bildprozessor nach einem der Ansprüche 1 bis 6, wobei der Leuchtdichtenhistogramm-Rechner (22) in einem Fall, in dem ein Leuchtdichtenhistogramm von Eingangsbilddaten berechnet wird, ein reduziertes Bild der Eingangsbilddaten verwendet.

8. Bildverarbeitungsverfahren, umfassend:
ein Leuchtdichtenhistogramm-Berechnungsverfahren, das ein Leuchtdichtenhistogramm hinsichtlich der Leuchtdichte von Bilddaten mit Leuchtdichteninformation berechnet;
ein Tonkurvenerzeugungsverfahren, das eine Tonkurve erzeugt, wo eine Eingang-Ausgang-Umwandlungskennlinie durch die Verwendung einer Standardtonkurve (31) und des Leuchtdichtenhistogramms, das von dem Leuchtdichtenhistogramm-Berechnungsverfahren berechnet wurde, ausgeglichen wird, wobei die Standardtonkurve (31) die Eingang-Ausgabe-Umwandlungskennlinie anzeigt, in der ein Leuchtdichtenwert eines Eingangsbilds, das an einer horizontalen Achse bestimmt ist, zu einem Leuchtdichtenwert eines Ausgabebildes, das an einer vertikalen Achse bestimmt ist, umgewandelt wird und wo ein Minimal- und ein Maximalwert von Ausgangsleuchtdichte bestimmt werden; und
ein Bildausgleichsverfahren, das Eingangsbilddaten durch die Tonkurve, die durch das Tonkurvenerzeugungsverfahren erzeugt wurde, ausgleicht, sodass sie Ausgangsbilddaten sind;
wobei:
das Tonkurvenerzeugungsverfahren einen Tonkurvenausgleichsvorgang durchführt, sodass ein Wendepunkt einer Tonkurve so festlegt ist, dass ein Wert an der vertikalen Achse an der Standardtonkurve (31) entsprechend eines Durchschnittswerts des Leuchtdichtenwerts der Eingangsbilddaten, der ein Wert an der horizontalen Achse ist, der durch das Leuchtdichtenhistogramm-Berechnungsverfahren berechnet wurde, ein Zielwert zwischen den Minimal- und Maximalwerten der Ausgangsleuchtdichte wird; und das Tonkurvenerzeugungsverfahren dann einen Tonkurvenaufteilungsvorgang durchführt, sodass ein Wert an der horizontalen Achse des Wendepunkts, der als letztes festgelegt wird, als eine Grenze genommen wird, ein Leuchtdichtenbereich des Leuchtdichtenhistogramms zu zwei Leuchtdichtenbereichen einer Seite mit hoher Leuchtdichte und einer Seite mit niedriger Leuchtdichte festgelegt wird und die Tonkurve, die als letztes ausgeglichen wird, in zwei Tonkurven aufgeteilt wird, die den zwei Leuchtdichtenbereichen entsprechen, und einen Tonkurvenausgleichsvorgang durchführt, sodass in dem festgelegten Leuchtdichtenbereich der Seite mit hoher Leuchtdichte ein zweiter Wendepunkt festgelegt wird und eine ausgeglichene Tonkurve erzeugt wird, indem der Punkt an der Standardtonkurve (31), wo der Wert der vertikalen Achse der Tonkurve den Maximalwert der Ausgangsleuchtdichte anzeigt, der Punkt an der Standardtonkurve (31), wo der Wert an der vertikalen Achse der Tonkurve den Maximalwert der Ausgangleuchtdichte anzeigt, und die festgelegten Wendepunkte, die aneinander angrenzen, der festgelegten Wendeunkte mit geraden Linien verbunden werden;
**dadurch gekennzeichnet, dass**:
der Zielwert ein Mittelwert zwischen den Minimal- und Maximalwerten der Ausgangsleuchtdichte ist;
in dem festgelegten Leuchtdichtebereich der Seite mit hoher Leuchtdichte ein Durchschnittswert eines Leuchtdichtenwerts eines Leuchtdichtenhistogramms berechnet wird, der ein Wert an der horizontalen Achse ist, und der zweite Wendepunkt so festgelegt ist, dass ein Wert an der vertikalen Achse der Tonkurve, der als letztes entsprechend dem berechneten Durchschnittswert des Leuchtdichtenwerts ausgeglichen wird, ein Mittelwert zwischen einem Wert an der vertikalen Achse des Wendepunkts, der als letztes festgelegt wird, und einem Maximalwert an der vertikalen Achse in dem festgelegten Leuchtdichtenbereich der Seite mit hoher Leuchtdichte wird,
in dem festgelegten Leuchtdichtebereich der Seite mit niedriger Leuchtdichte ein Durchschnittswert eines Leuchtdichtenwerts eines Leuchtdichtenhistogramms, der ein Wert an der horizontalen Achse ist, berechnet wird, ein Wendepunkt neu festgelegt wird, sodass ein Wert an der vertikalen Achse der Tonkurve, der als letztes entsprechend dem berechneten Durchschnittswert des Leuchtdichtenwerts ausgeglichen wird, ein Mittelwert zwischen einem Wert an der vertikalen Achse des Wendepunkts, der als letztes festgelegt wird, und einem Minimalwert an der vertikalen Achse in dem festgelegten Leuchtdichtenbereich der Seite mit niedriger Leuchtdichte wird, und
die ausgeglichene Tonkurve erzeugt wird, indem der Punkt an der Standardtonkurve (31), wo der Wert an der vertikalen Achse der Tonkurve den Maximalwert der Ausgangsleuchtdichte angibt, der Punkt an der Standardtonkurve (31), wo der Wert an der vertikalen Achse der Tonkurve den Minimalwert der Ausgangleuchtdichte angibt, und die festgelegten Wendepunkte, die aneinander angrenzen, der festgelegten Wendepunkte mit geraden Linien verbunden werden.

9. Bildverarbeitungsverfahren nach Anspruch 8, wobei das Tonkurvenerzeugungsverfahren den Tonkurvenaufteilungsvorgang wiederholt durchführt, und den Tonkurvenausgleichsvorgang in einer vorbestimmten Anzahl von Wiederholungen durchführt.

10. Bildverarbeitungsverfahren nach Anspruch 8, wobei das Tonkurvenerzeugungsverfahren den Tonkurvenerzeugungsvorgang und den Tonkurvenausgleichsvorgang in einem Fall, in dem vollständige Leuchtdichtenwerte durch vorbestimmte Auflösung aufgeteilt werden, wiederholt durchführt, bis ein Durchschnittswert eines Leuchtdichtenwerts ein Wert zwischen aufgeteilten Leuchtdichtenwerten wird, die nebeneinanderliegen, und eine ausgeglichene Tonkurve erzeugt wird.

11. Bildverarbeitungsverfahren nach Anspruch 8, wobei das Tonkurvenerzeugungsverfahren in einem Fall, in dem vollständige Leuchtdichtenwerte durch vorbestimmte Auflösung aufgeteilt werden und ein Durchschnittswert eines Leuchtdichtenwerts ein Wert zwischen aufgeteilten Leuchtdichtenwerten wird, die in einem Leuchtdichtenwertbereich nebeneinanderliegen, den Tonkurvenaufteilungsvorgang und den Tonkurvenausgleichsvorgang nur in einem Leuchtdichtenbereich durchführt, in dem der Durchschnittswert des Leuchtdichtenwerts nicht ein Wert zwischen den aufgeteilten Leuchtdichtenwerten wird, die nebeneinanderliegen, und eine ausgeglichene Tonkurve erzeugt wird.

12. Bildverarbeitungsprogramm, das, wenn es durch ein Computersystem ausgeführt wird, das System anweist, das Bildverarbeitungsverfahren nach einem der Ansprüche 8 bis 11 durchzuführen.

13. Bildgebungsgerät, das den Bildprozessor nach einem der Ansprüche 1 bis 7 verwendet.

## Revendications

1. Appareil de traitement d'image comprenant :
une unité de calcul d'histogramme de luminance (22) qui calcule un histogramme de luminance quant à la luminance de données image comportant des informations de luminance ;
un générateur de courbe de tonalités (23) qui génère une courbe de tonalités où une caractéristique de conversion d'entrée-sortie est compensée par l'utilisation d'une courbe de tonalités par défaut (31) et l'histogramme de luminance calculé par l'unité de calcul d'histogramme de luminance (22), la courbe de tonalités par défaut (31) indiquant la caractéristique de conversion d'entrée-sortie dans laquelle une valeur de luminance d'une image d'entrée définie sur un axe horizontal est convertie en valeur de luminance d'une image de sortie définie sur un axe vertical et où des valeurs minimum et maximum de luminance de sortie sont définies ; et
un compensateur d'image (24) qui compense des données image d'entrée par le biais de la courbe de tonalités générée par le générateur de courbe de tonalités (23) pour obtenir des données image de sortie ;
dans lequel :
le générateur de courbe de tonalités (23) effectue une opération de compensation de courbe de tonalités de manière qu'un point de virage d'une courbe de tonalités est définie de manière qu'une valeur sur l'axe vertical de la courbe de tonalités par défaut (31) correspondant à une valeur moyenne de la valeur de luminance des données image d'entrée, qui est une valeur sur l'axe horizontal, calculée par l'unité de calcul d'histogramme de luminance (22), devient une valeur cible entre les valeurs minimum et maximum de la luminance de sortie ; et
le générateur de courbe de tonalités (23) effectue alors une opération de division de courbe de tonalités de manière qu'une valeur sur l'axe horizontal du point de virage défini en dernier est pris comme limite, une zone de luminance de l'histogramme de luminance est définie selon deux zones de luminance ayant un côté à luminance élevée et un côté à luminance faible et la courbe de tonalités compensée en dernier est divisée en deux courbes de tonalités correspondant aux deux zones de luminance, et effectue une opération de compensation de courbes de tonalités de manière que dans la zone de luminance définie du côté à luminance élevée, un deuxième point de virage est défini et une courbe de tonalités compensée est générée par la liaison du point sur la courbe de tonalités par défaut (31) où la valeur sur l'axe vertical de la courbe de tonalités indique la valeur maximum de la luminance de sortie, du point sur la courbe de tonalités par défaut (31) où la valeur sur l'axe vertical de la courbe de tonalités indique la valeur minimum de la luminance de sortie et des points de virage définis adjacents les uns aux autres des points de virage définis avec des lignes droites ;
**caractérisé en ce que** :
la valeur cible est une valeur centrale entre les valeurs minimum et maximum de la luminance de sortie ;
dans la zone de luminance définie du côté à luminance élevée une valeur moyenne d'une valeur de luminance d'un histogramme de luminance, qui est une valeur sur l'axe horizontal, est calculée, et le deuxième point de virage est défini de manière qu'une valeur sur l'axe vertical de la courbe de tonalités compensée en dernier correspondant à la valeur moyenne calculée de la valeur de luminance devient une valeur centrale entre une valeur sur l'axe vertical du point de virage défini en dernier et une valeur maximum sur l'axe vertical dans la zone de luminance définie du côté à luminance élevée,
dans la zone de luminance définie du côté à luminance faible, une valeur moyenne d'une valeur de luminance d'un histogramme de luminance, qui est une valeur sur l'axe horizontal, est calculée, un troisième point de virage est défini de manière qu'une valeur sur l'axe vertical de la courbe de tonalités compensée en dernier correspondant à la valeur moyenne calculée de la valeur de luminance devient une valeur centrale entre une valeur sur l'axe vertical du point de virage défini en dernier et une valeur minimum sur l'axe vertical dans la zone de luminance définie du côté à luminance faible, et
la courbe de tonalités compensée est générée par la liaison du point sur la courbe de tonalités par défaut (31) où la valeur sur l'axe vertical de la courbe de tonalités indique la valeur maximum de la luminance de sortie, du point sur la courbe de tonalités par défaut (31) où la valeur sur l'axe vertical de la courbe de tonalités indique la valeur minimum de la luminance de sortie, et des points de virage définis adjacents les uns aux autres des points de virage définis avec des lignes droites.

2. Appareil de traitement d'image selon la revendication 1, dans lequel le générateur de courbe de tonalités (23) effectue de manière répétée l'opération de division de courbe de tonalités et effectue l'opération de compensation de courbe de tonalités un nombre prédéterminé de fois.

3. Appareil de traitement d'image selon la revendication 1, dans lequel le générateur de courbe de tonalités (23) effectue de manière répétée l'opération de division de courbe de tonalités et l'opération de compensation de courbe de tonalités, au où des valeurs de luminance totale sont divisées par une résolution prédéterminée jusqu'à ce qu'une valeur moyenne d'une valeur de luminance devienne une valeur située entre des valeurs de luminance divisée qui sont proches les unes des autres, et une courbe de tonalités compensée est générée.

4. Appareil de traitement d'image selon la revendication 1, dans lequel le générateur de courbe de tonalités (23), au cas où des valeurs de luminance totale sont divisées par une résolution prédéterminée et une valeur moyenne d'une valeur de luminance devient une valeur située entre des valeurs de luminance divisée qui sont proches les unes des autres dans une zone de valeurs de luminance, effectue l'opération de division de courbe de tonalités et l'opération de compensation de courbe de tonalités seulement dans une zone de luminance dans laquelle la valeur moyenne de la valeur de luminance ne devient pas une valeur située entre les valeurs de luminance divisée qui sont proches les unes des autres, et une courbe de tonalités compensée est générée.

5. Appareil de traitement d'image selon l'une quelconque des revendications 1 à 4, comprenant en outre :
un compresseur de courbe de tonalités (25) qui comprime une valeur de luminance de sortie d'une courbe de tonalités pour empêcher une transition de tonalité produite par une quantité de changement de sortie des données image de sortie pour une quantité de changement des données image d'entrée qui devient supérieure à une quantité prédéterminée dans la courbe de tonalités compensée générée par le générateur de courbe de tonalités (23).

6. Appareil de traitement d'image selon l'une quelconque des revendications 1 à 5, comprenant en outre :
un compensateur supplémentaire de courbe de tonalités (26) qui compense en outre une courbe de tonalités de manière qu'une quantité de projection de la courbe de tonalités est diminuée tandis qu'elle se rapproche d'une valeur centrale d'une valeur de luminance d'entrée.

7. Appareil de traitement d'image selon l'une quelconque des revendications 1 à 6, dans lequel l'unité de calcul d'histogramme de luminance (22), au cas où un histogramme de luminance de données image d'entrée est calculé, utilise une image réduite des données image d'entrée.

8. Appareil de traitement d'image comprenant :
un processus de calcul d'histogramme de luminance qui calcule un histogramme de luminance quant à la luminance de données image comportant des informations de luminance ;
un processus de génération de courbe de tonalités qui génère une courbe de tonalités où une caractéristique de conversion d'entrée-sortie est compensée par l'utilisation d'une courbe de tonalités par défaut (31) et l'histogramme de luminance calculé par le processus de calcul d'histogramme de luminance, la courbe de tonalités par défaut (31) indiquant la caractéristique de conversion d'entrée-sortie dans laquelle une valeur de luminance d'une image d'entrée définie sur un axe horizontal est convertie en valeur de luminance d'une image de sortie définie sur un axe vertical et où des valeurs minimum et maximum de luminance de sortie sont définies ; et
un processus de compensation d'image qui compense des données image d'entrée par la courbe de tonalités générée par le processus de génération de courbe de tonalités pour obtenir des données image de sortie ;
dans lequel :
le processus de génération de courbe de tonalités effectue une opération de compensation de courbe de tonalités de manière qu'un point de virage d'une courbe de tonalités est défini de manière qu'une valeur sur l'axe vertical de la courbe de tonalités par défaut (31) correspondant à une valeur moyenne de la valeur de luminance des données image d'entrée, qui est une valeur sur l'axe horizontal, calculée par le processus de calcul d'histogramme de luminance, devient une valeur cible située entre les valeurs minimum et maximum de la luminance de sortie ; et le processus de génération de courbe de tonalités effectue ensuite une opération de division de courbe de tonalités de manière qu'une valeur sur l'axe horizontal du point de virage défini en dernier est prise comme limite, une zone de luminance de l'histogramme de luminance est définie selon deux zones de luminance ayant un côté à luminance élevée et un côté à luminance faible, et la courbe de tonalités compensée en dernier est divisée en deux courbes de tonalités correspondant aux deux zones de luminance, et effectue une opération de compensation de courbe de tonalités de manière que et dans la zone de luminance définie du côté à luminance élevée, un deuxième point de virage est défini et une courbe de tonalités compensée est générée par la liaison du point sur la courbe de tonalités par défaut (31) où la valeur sur l'axe vertical de la courbe de tonalités indique la valeur maximum de la luminance de sortie, du point sur la courbe de tonalités par défaut (31) où la valeur sur l'axe vertical de la courbe de tonalités indique la valeur minimum de la luminance de sortie, et des points de virage définis adjacents les uns aux autres des points de virage définis avec des lignes droites ;
**caractérisé en ce que** :
la valeur cible est une valeur centrale située entre les valeurs minimum et maximum de la luminance de sortie ;
dans la zone de luminance définie du côté à luminance élevée une valeur moyenne d'une valeur de luminance d'un histogramme de luminance, qui est une valeur sur l'axe horizontal, est calculée et le deuxième point de virage est défini de manière qu'une valeur sur l'axe vertical de la courbe de tonalités compensée en dernier correspondant à la valeur moyenne calculée de la valeur de luminance devient une valeur centrale située entre une valeur sur l'axe vertical du point de virage défini en dernier et une valeur maximum de l'axe vertical dans la zone de luminance du côté à luminance élevée,
dans la zone de luminance définie du côté à luminance faible, une valeur moyenne d'une valeur de luminance d'un histogramme de luminance, qui est une valeur sur l'axe horizontal, est calculée, un point de virage est à nouveau défini de manière qu'une valeur sur l'axe vertical de la courbe de tonalités compensée en dernier correspondant à la valeur moyenne calculée de la valeur de luminance devient une valeur centrale située entre une valeur sur l'axe vertical du point de virage défini en dernier et une valeur minimum sur l'axe vertical dans la zone de luminance définie du côté à luminance faible, et
la courbe de tonalités compensée est générée par la liaison du point sur la courbe de tonalités par défaut (31) où la valeur sur l'axe vertical de la courbe de tonalités indique la valeur maximum de la luminance de sortie, du point sur la courbe de tonalités par défaut (31) où la valeur sur l'axe vertical de la courbe de tonalités indique la valeur minimum de la luminance de sortie, et des points de virage définis adjacents les uns aux autres des points de virage définis avec des lignes droites.

9. Procédé de traitement d'image selon la revendication 8, dans lequel le processus de génération de courbe de tonalités effectue l'opération de division de courbe de tonalités de manière répétée, et effectue l'opération de compensation de courbe de tonalités un nombre prédéterminé de fois.

10. Procédé de traitement d'image selon la revendication 8, dans lequel le processus de génération de courbe de tonalités consiste à effectuer de manière répétée l'opération de division de courbe de tonalités et l'opération de compensation de courbe de tonalités, au cas où des valeurs de luminance totale sont divisées par une résolution prédéterminée, jusqu'à ce qu'une valeur moyenne d'une valeur de luminance devienne une valeur située entre des valeurs de luminance divisée qui sont proches les unes des autres, et une courbe de tonalités compensée est générée.

11. Procédé de traitement d'image selon la revendication 8, dans lequel le processus de génération de courbe de tonalités, au cas où des valeurs de luminance totale sont divisées par une résolution prédéterminée et une valeur moyenne d'une valeur de luminance devient une valeur située entre des valeurs de luminance divisée qui sont proches les unes des autres dans une zone de valeur de luminance, consiste à effectuer l'opération de division de courbe de tonalités et l'opération de compensation de courbe de tonalités seulement dans une zone de luminance dans laquelle la valeur moyenne de la valeur de luminance ne devient pas une valeur située entre les valeurs de luminance divisée qui sont proches les unes des autres, et une courbe de tonalités compensée est générée.

12. Programme de traitement d'image qui, lorsqu'exécuté par un système informatique, ordonne au système d'effectuer le procédé de traitement d'image selon l'une quelconque des revendications 8 à 11.

13. Appareil d'imagerie qui utilise l'appareil de traitement d'image selon l'une quelconque des revendications 1 à 7.
